# EUROPEAN PATENT APPLICATION

(11) **EP 4 564 746 A1**
(43) Date of publication of application: **04.06.2025**
(21) Application number: 23845327.8
(22) Date of filing: 13.07.2023
(51) Int. Cl.: H04L 12/00

(54) **METHOD AND APPARATUS FOR IMPLEMENTING BFD IN BIER NETWORK, AND STORAGE MEDIUM**

(30) Priority: 29.07.2022 CN 202210908203; 25.11.2022 CN 202211494257
(71) Applicant: ZTE Corporation, Shenzhen, Guangdong 518057 (CN)
(72) Inventor: WEI, Yuehua, Shenzhen, Guangdong 518057 (CN); ZHANG, Zheng, Shenzhen, Guangdong 518057 (CN)
(74) Representative: Aipex B.V.
(86) International application number: PCT/CN2023/107142
(87) International publication number: WO 2024/022115

(57) **Abstract**

A method and apparatus for implementing BFD in a BIER network, and a storage medium are provided. The method for implementing BFD in a BIER network includes: a first BFIR notifying each BFER in a BIER network of BIER information and BFD information; and the first BFIR establishes a multipoint BFD session with at least one BFER in the BIER network that successfully receives the BIER information and the BFD information, where the multipoint BFD session is associated with traffic flow information which is transmitted by the first BFIR.

## Description

This application claims priorities to Chinese patent application No. 202210908203.5 filed with the China National Intellectual Property Administration (CNIPA) on July 29, 2022 and Chinese patent application No. 202211494257.8 filed with the China National Intellectual Property Administration (CNIPA) on November 25, 2022, the disclosures of which are incorporated herein by reference in their entireties.

### TECHNICAL FIELD

The present application relates to the field of data communication, for example, to a method and apparatus for implementing BFD in a BIER network and a storage medium.

### BACKGROUND

Bit Indexed Explicit Replication (BIER) is a new type of multicast data forwarding technology. With this technology, each node at the edge of the network is represented with only one bit. The multicast flow is transmitted in the intermediate network, with an additional BIER message header being encapsulated. This BIER message header marks, in the form of a bit string, all the destination nodes, namely the Bit-Forwarding Egress Routers (BFER), of the multicast flow. The intermediate network forwarding nodes route according to the bits to ensure that the flow can be sent to all destination nodes. The intermediate node forwarding devices form in advance, through the routing protocol, a table for guiding BIER forwarding, and when receiving the flow in the encapsulated BIER message header, complete the forwarding of the message to the destination nodes according to the Bit Index Forwarding Table (BIFT). The ingress node of the BIER domain, namely the Bit-Forwarding Ingress Router (BFIR), encapsulates the multicast flow entering the BIER domain in the payload of the BIER message. After the intermediate nodes forward the BIER message, the egress node BFER of the BIER domain receives the BIER message, and after removing the BIER message header, forwards the rest payload to the corresponding receiver. BIER, the data plane forwarding technology, eliminates the delay caused by multicast tree construction because it does not involve the problem of multicast tree construction, and when there are link or node problems in the network, the convergence speed, compared with that under the multicast tree reconstruction of Intermediate System-to-Intermediate System (ISIS) protocol or the Open Shortest Path First (OSPF) protocol, is remarkably improved since the significant delay is reduced.

For the ingress device BFIR of the BIER domain, if it wants to transmit a certain multicast flow, it needs to know which egress devices BFER of the BIER domain need this multicast flow. Therefore, there needs to be signaling interaction between BFIR and BFERs. The signaling technology of these interactions is referred to as BIER Overlay technology. The Bit-Forwarding Router (BFR) devices in the middle that are used only for BIER forwarding do not need to know the multicast flow information.

In order to build BIER forwarding table entries, protocols such as OSPF or ISIS will support BIER information notification through signaling extensions. All nodes in the BIER domain will receive BIER information from other nodes and use it to build BIER forwarding table entries. Protocols such as OSPF or ISIS that support BIER information interaction through signaling extensions are called BIER Underlay technologies.

Bidirectional Forwarding Detection (BFD) is a network protocol used to detect faults between two forwarding points. Its detection mechanism can provide millisecond-level detection and can achieve rapid detection of links. BFD can achieve rapid convergence of routing by linking with upper-layer routing protocols to ensure the continuity of a certain traffic. Multipoint BFD is a special application of BFD in multipoint or multicast networks. However, the current BIER BFD technology can only provide node-level detection, that is, only when the BIER node that sends the BFD message completely fails, can other BIER nodes perceive and respond to it. However, in practice, network deployment is not that simple, BIER nodes often do not serve only one type of traffic. The current node detection cannot achieve rapid fault detection at the traffic level.

### SUMMARY

In view of this, it is intended to provide a method and apparatus for implementing BFD in a BIER network and a storage medium according to the embodiments of the present application.

In view of this, it is intended to provide a method for implementing BFD in a BIER network according to embodiments of the present application, which includes as follows.

A first BFIR notifies BIER information and BFD information to each BFER in a BIER network.

The first BFIR establishes a multipoint BFD session with at least one BFER in the BIER network that successfully receives the BIER information and the BFD information, where the multipoint BFD session is associated with traffic flow information transmitted by the first BFIR.

In a second aspect, a method for implementing BFD in a BIER network is provided according to embodiments of the present application, which includes as follows.

At least one BFER receives BIER information and BFD information notified by a first BFIR in a BIER network.

The at least one BFER establishes a multipoint BFD session with the first BFIR, where the multipoint BFD session is associated with traffic flow information transmitted by the first BFIR.

In a third aspect, a device for implementing BFD in a BIER network is further provided according to embodiments of the present application, which is applied to a first BFIR, and includes: a memory and a processor.

The memory is configured to store a program;
The processor is configured to execute a program. When the program is executed, the program is configured to notify each BFER in a BIER network of BIER information and BFD information; and establish a multipoint BFD session with at least one BFER in the BIER network that successfully receives the BIER information and BFD information, where the multipoint BFD session is associated with traffic flow information transmitted by the first BFIR.

In a fourth aspect, a device for implementing BFD in a BIER network is further provided according to embodiments of the present application, which is applied to a BFER and includes: a memory and a processor.

The memory is configured to store a program.

The processor is configured to execute a program. When the program is executed, the program is configured to receive BIER information and BFD information notified by a first BFIR of a BIER network and is configured to establish a multipoint BFD session with the first BFIR, where the multipoint BFD session is associated with traffic flow information transmitted by the first BFIR.

In a fifth aspect, a storage medium is further provided according to embodiments of the present application, the storage medium includes a stored program, where the program executes the method for implementing BFD in a BIER network according to the embodiments of the present application when it is running.

With the method, apparatus for implementing BFD in a BIER network and the storage medium according to the embodiments of the present application, when an issue occurs in a node or a traffic, the BIER can quickly perceive and respond, thereby shortening the duration for which the traffic flow is adversely affected and ensuring high-quality operation of the traffic.

### BRIEF DESCRIPTION OF DRAWINGS

FIG. 1 is a schematic diagram of BIER network flow;
FIG. 2 is a flow chart of a method for implementing BFD in a BIER network according to an embodiment of the present application;
FIG. 3 is a schematic diagram of the format of BFD information;
FIG. 4 is a schematic diagram of the format of BIER information;
FIG. 5 is a schematic diagram of the format of traffic information;
FIG. 6 is a schematic diagram of the format of a new type of PIM message;
FIG. 7 is another flow chart of a method for implementing BFD in a BIER network according to an embodiment of the present application;
FIG. 8 is another schematic diagram of BIER network flow;
FIG. 9 is still another schematic diagram of BIER network flow;
FIG. 10 is another schematic diagram of the format of BIER information;
FIG. 11 is still another schematic diagram of BIER network flow; and
FIG. 12 is a schematic diagram of the format of BIER BFD message with traffic.

### DETAILED DESCRIPTION

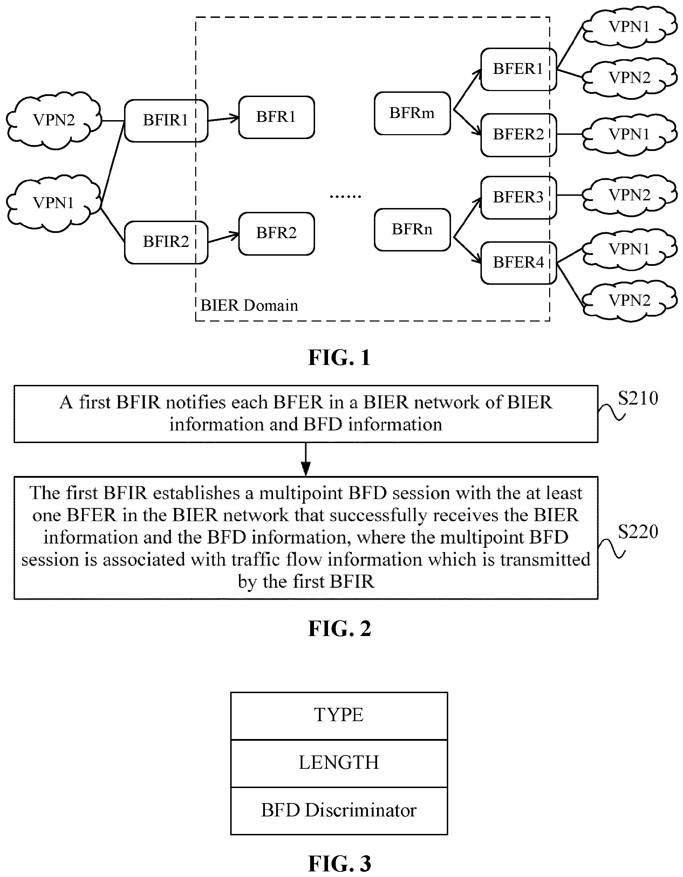

FIG. 1 is a schematic diagram of BIER network flow. As shown in FIG. 1, the traffic flow that BFIR1 is responsible for comes not only from Virtual Private Network (VPN) 1, but also from VPN2. In addition, for the traffic flow from VPN1, BFIR2 is a backup ingress node of BFIR1. The BIER nodes that follow VPN1 traffic flow are BFER1, BFER2 and BFER4; the BIER nodes that follow VPN2 traffic flow are BFER1, BFER3 and BFER4. Assume that a problem arises in the traffic interface of BFIR1 with VPN1, causing the VPN1 traffic flow on BFIR1 to be disrupted, but the VPN2 traffic on BFIR1 is normal, in this case, even if BFERs monitor the status of BFIR1, because BFER1 is still running, the conventional BIER BFD technology cannot detect the disruption of VPN1 traffic. Therefore, BFER1 to BFER4 cannot quickly perceive the abnormality of VPN1 traffic on BFIR1. Only when BFIR1 uses protocol signaling to notify the withdrawal of its VPN1 traffic route, will BFER1 to BFER4 know about it, and then BFER1, BFER2 and BFER4 will perform corresponding processing and re-notify, by signaling, BFIR2 of the requirement of the traffic flow of VPN1. After receiving the signaling, BFIR2 forwards the flow to these BFERs. During this process, the traffic flow is disrupted, and the duration may reach seconds or even more than ten seconds, which will seriously affect the traffic flow.

FIG. 2 is a flow chart of a method for implementing BFD in a BIER network according to an embodiment of the present application. As shown in FIG. 2, the method for implementing BFD in a BIER network according to this embodiment includes: S210 to S220.

In S210, a first BFIR notifies each BFER in the BIER network of BIER information and BFD information.

The method for implementing BFD in a BIER network according to this embodiment is applied to a BFIR in the BIER network. The first BFIR can be any BFIR in the BIER network. The first BFIR may notify each BFER in the BIER network of BIER information and BFD information. The first BFIR may notify each BFER in the BIER network of BIER information and BFD information by broadcast or multicast. The BIER information is used to represent the relevant information of the BIER network, and the BFD information is used to represent the relevant information of traffic-level BFD.

The first BFIR may notify each BFER of the BIER network of BIER information and BFD information by using a BIER Overlay protocol message, a BGP protocol message, or a BIER Operations, Administration, and Maintenance (OAM) protocol message. The BIER Overlay protocol message may include any of the following messages: a query message of the Multicast Listener Discovery (MLD) protocol; a query message of the Internet Group Management Protocol (IGMP); a Protocol Independent Multicast (PIM) message; a request message of the Hyper Text Transfer Protocol (HTTP); or a Border Gateway Protocol (BGP) message. Alternatively, the BIER Overlay protocol message may also be other possible transfer protocol messages that do not pass through the intermediate nodes of the BIER network. The BIER Overlay protocol message may further carry traffic information.

The BFD information includes a BFD discriminator. When the first BFIR further notifies each BFER of the traffic information through the BIER Overlay protocol message, the BGP message or the BIER OAM protocol message, the traffic information corresponds to the BFD Discriminator in the BFD information.

The BIER information includes: a BFR identifier and/or subdomain information.

Exemplarily, the first BFIR may notify BIER information and BFD information through the following protocol messages: a query message of the MLD protocol which carries BFD information and BIER information or further carries traffic information; a query message of the IGMP protocol which carries BFD information and BIER information or further carries traffic information; a Hello message of the PIM protocol (or other types of PIM messages that may be defined) which carries BFD TLV (Type, Length, Value) information and BIER information or further carries traffic information; and a request message of the HTTP protocol which carries BFD TLV information and BIER information or further carries traffic information.

According to the method in RFC9026, the BGP protocol message, when notifying the BFD Discriminator attribute, should has BIER information added as an optional TLV of the BFD Discriminator attribute; or notify the BFD Discriminator information together with the BIER information in the BGP path attribute or the tunnel encapsulation path attribute and/or traffic information. When the first BFIR notifies each BFER of the BIER network of the BIER information and BFD information through the BGP message, the multipoint BFD session is associated with the P-Multicast Service Interfaces (X-PMSI) or Network Layer Reachable Information (NLRI) Auto Discovery (AD) routing traffic flow information in the BGP message.

The BGP protocol message carries BIER information and BFD information;
or the BGP path attribute of the BGP protocol message carries BIER information and BFD information;
or the tunnel encapsulation path data of the BGP protocol message carries BIER information and BFD information.

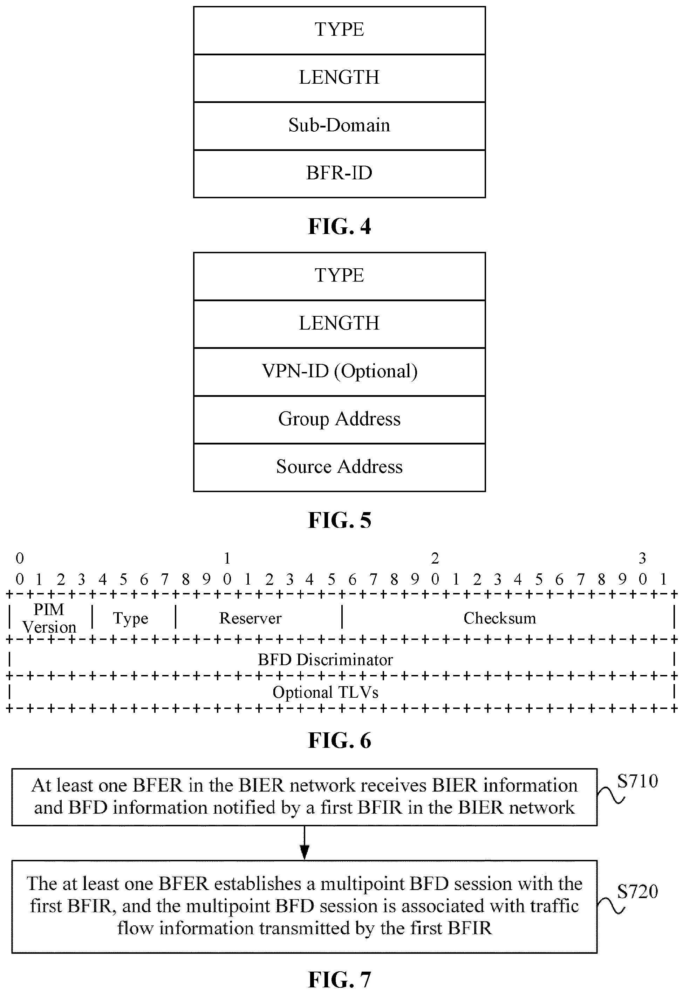

BFD information and BIER information can be represented in the form of type, length, value (TLV). For example, BFD information can be represented in the form of BFD TLV or BFD SUB-TLV. For example, as shown in FIG. 3, FIG. 3 is a schematic diagram of the format of BFD information. BIER information can also be identified in the form of BIER TLV, for example, as shown in FIG. 4, FIG. 4 is a schematic diagram of the format of BIER information. When the BIER Overlay protocol message carries traffic information, the traffic information can also be reflected in the form of TLV or SUB-TLV, as shown in FIG. 5, FIG. 5 is a schematic diagram of the format of traffic information, and the format includes type (OPTION TYPE), length (LENGTH), VPN identifier (VPN-ID) (optional), group address (Group Address), and source address (Source Address). When the PIM protocol is implemented using a new type of PIM message, assuming that the new type of PIM message is a BFD message, the format can be as shown in FIG. 6. FIG. 6 is a schematic diagram of the new type of PIM message format, and the format includes PIM version (PIM ver), type (Type), reserved field (Reserver), checksum (Checksum), BFD Discriminator, and optional TLVs (Optional TLVs). In a case where the new type of PIM message carries BIER information and traffic information, the format is similar to those shown in FIG. 4 and FIG. 5. The processing method of HTTP is similar to those described above and will not be repeatedly described here. In the present application, the various message formats are not limited to those shown in the various figures of the present application.

In an optional implementation, after the first BFIR notifies each BFER of the BIER network of BIER information and BFD information, the method further includes: the first BFIR receives the BIER information and the BFD information from at least one BFER in the BIER network that successfully receives the BIER information and the BFD information. In other words, the at least one BFER that successfully receives the BIER information and the BFD information can also send BIER information and BFD information to the first BFIR. The at least one BFER that successfully receives the BIER information and the BFD information can also send BIER information and BFD information to the first BFIR through BIER Overlay protocol messages, such as IGMP report (Report) messages, MLD report messages, HTTP response (Response) messages, etc.

In S220, the first BFIR establishes a multipoint BFD session with the at least one BFER in the BIER network that successfully receives the BIER information and the BFD information, and the multipoint BFD session is associated with traffic flow information transmitted by the first BFIR.

After the first BFIR notifies each BFER of the BIER information and the BFD information, at least one BFER in the BIER network that successfully receives the BIER information and the BFD information will give feedback of reception responses to the first BFIR, and then the first BFIR can establish a multipoint BFD session with the at least one BFER that successfully receives the BIER information and the BFD information, and the multipoint BFD session is associated with the traffic flow information transmitted by the first BFIR. In this way, when the first BFIR fails or the traffic transmitted on the first BFIR fails, each BFER that has established BFD sessions with the first BFIR can quickly perceive and respond, thereby shortening the duration for which the traffic flow is adversely affected and ensuring high-quality operation of the traffic.

When the first BFIR transmits different traffic flows, the first BFIR establishes corresponding multipoint BFD sessions with the at least one BFER that successfully receives the BIER information and the BFD information for the traffic flows, and each multipoint BFD session is associated with traffic flow information transmitted by the first BFIR. That is, for each traffic flow, the first BFIR establishes a corresponding multipoint BFD session with the at least one BFER that successfully receives the BIER information and the BFD information, so that when one traffic flow fails, it will not affect other traffic flow.

In an optional implementation, after the first BFIR establishes a multipoint BFD session with the at least one BFER that successfully receives the BIER information and the BFD information, the method further includes: the first BFIR keeping the multipoint BFD session alive; and when the first BFIR fails or a multicast traffic transmitted by the first BFIR fails, the multipoint BFD session being no longer kept alive. When the first BFIR transmits different traffic flows, the first BFIR establishes a multipoint BFD session for each traffic flow, and keeps the sessions alive separately. When one traffic flow transmitted by the first BFIR fails, the first BFIR stops keeping alive the BFD session corresponding to the traffic flow only.

In an optional implementation, in the method for implementing BFD in a BIER network provided, a BFIR of a BIER network notifies each BFER of the BIER network of BIER information and BFD information, and/or traffic information, and establishes, according to the BIER information and BFD information, a multipoint BFD session associated with the traffic flow information transmitted by the BFIR, so that when an issue occurs in the node or the traffic, the BIER nodes can quickly perceive and respond, thereby shortening the duration for which the traffic flow is affected and ensuring high-quality operation of the traffic.

FIG. 7 is another flow chart of a method for implementing BFD in a BIER network according to an embodiment of the present application. As shown in FIG. 7, the method for implementing BFD in a BIER network according to this embodiment includes S710 and S720.

In S710, at least one BFER in the BIER network receives BIER information and BFD information notified by a first BFIR in the BIER network.

In S720, the at least one BFER establishes a multipoint BFD session with the first BFIR, and the multipoint BFD session is associated with traffic flow information transmitted by the first BFIR.

The method for implementing BFD in a BIER network according to this embodiment is applied to at least one BFER in the BIER network. The processing performed by the at least one BFER when applying the method for implementing BFD in the BIER network according to this embodiment has been described in detail in the embodiment shown in FIG. 2 and will not be repeated in this embodiment.

The method for implementing BFD in the BIER network according to embodiments of the present application is described in detail below by taking several embodiments as examples.

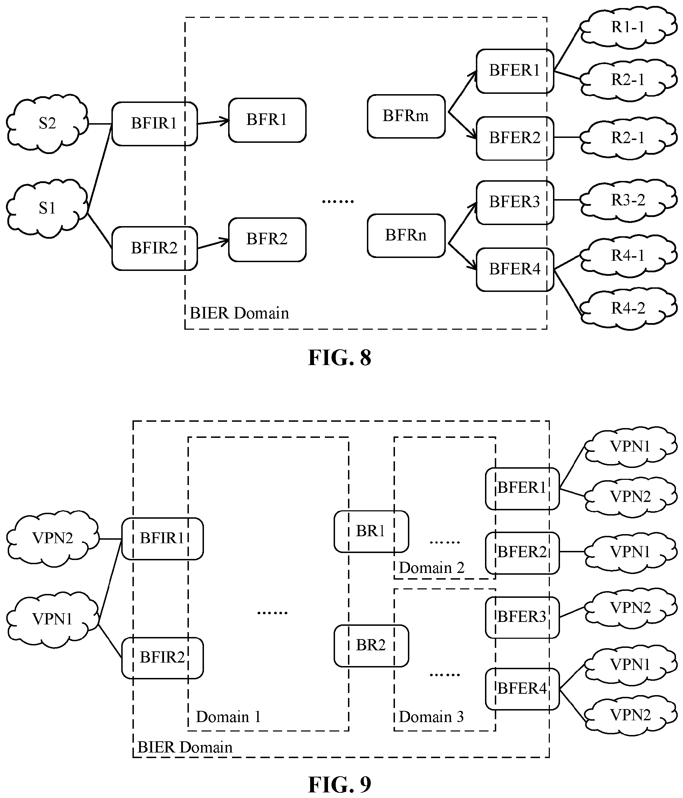

FIG. 8 is another schematic diagram of BIER network flow. As shown in FIG. 8, BFIR1 and BFIR2 are connected to multicast sources S1 and S2, and BFER1 to BFER4 are connected to multiple receivers, respectively.

FIG. 9 is another schematic diagram of BIER network flow. As shown in FIG. 9, BFIR1 and BFIR2 are connected to VPN2 and VPN1, and BFER1 to BFER4 are connected to multiple receivers, respectively. The BIER domain consists of multiple Interior Gateway Protocols (IGP) domains.

First embodiment: for a network as shown in FIG. 8, it is assumed that this network uses MLD/IGMP as the BIER Overlay protocol, the MLD/IGMP protocol runs only on edge devices BFIR1/2 and BFER1/2/3/4, and does not run on intermediate devices BFRs. BFIR1/2 is connected to multicast sources S1 and S2, and BFER1 to BFER 4 are connected to multiple receivers respectively. Alternatively, for a network as shown in FIG. 9, the BIER domain consists of multiple IGP domains, and in addition to the intermediate devices BFRs in each IGP domain, the MLD/IGMP protocol will not run on edge devices such as BR1 and BR2 of IGP domains.

Taking BFIR1 as an example, when receiving traffic flows pushed by multicast sources S1 and S2, BFIR1 sends the traffic flow information to other edge devices through a query message of the MLD or IGMP. Assuming that for the flow from S1, BFER1, BFER2 and BFER4 have receivers connected thereto, then BFER1, BFER2 and BFER4 will send response report messages to BFIR1, and BFIR1 will push the traffic flow information through BIER encapsulation to these BFERs. Because BFIR2 also receives flow from S1, BFIR2 will also send a query message to other edge devices. BFER1, BFER2 and BFER4 may send report messages only to BFIR1 according to configuration or other policies.

In order to improve the reliability of the traffic, BFIR1 sends a query message carrying BIER information and BFD information. The encapsulation formats of the BIER information and BFD information are similar to those shown in FIG. 3 and FIG. 4. Assuming that BFIR1 only wants to establish one multipoint BFD session, thus when BFIR1 sends query messages of the traffic flow information of S1 and S2, the messages can carry the same BIER information and BFD information, the receiving device such as BFER1 can create a multipoint BFD session directly based on the BFR-IDs and BFD Discriminator information in the BIER information, and regularly receive the BFD messages based on BIER encapsulation sent by BFIR1 for the session. Assuming that there is a problem with the BFIR1 or the path between BFIR1 and BFER1, BFER2 and BFER4, resulting in the disruption of the BFD message for the multipoint BFD session, the receiving device such as BFER1 can respond quickly, such as immediately sending a report message to BFIR2 to indicate that it wants to receive the traffic flow from S1, so that the traffic can be restored as soon as possible from the fault.

The BFIR1 can also create two multipoint BFD sessions for different traffics, such as multicast sources S1 and S2, and thus when the BFIR1 sends query messages carrying the traffic flow information of S1 and S2, it can send different BFD Discriminators for the different traffics. In this way, the receiving device, such as BFER1, will create two different multipoint BFD sessions according to the BFR-IDs in the BIER information and the BFD Discriminators in the BFD information. BFIR1 will periodically send BFD messages for these two multipoint BFD sessions, and the BFER1 and other devices will determine the operation status of the two traffics on BFIR1 based on the reception of BFD messages. When the S1 traffic flow on BFIR1 is disrupted, BFIR1 stops sending BFD messages to the multipoint BFD session corresponding to the S1 traffic flow, but continues to send BFD messages to the multipoint BFD session corresponding to the S2 traffic flow, and BFER1 and other receiving devices can quickly perceive the failure of the multipoint BFD session corresponding to the S1 traffic flow and respond accordingly.

Second embodiment: For a network as shown in FIG. 1, it is assumed that the network uses PIM as the BIER Overlay protocol, and the PIM protocol only runs on the edge devices BFIR1/2 and BFER1/2/3/4, and does not run on the intermediate devices BFRs. Alternatively, for a network as shown in FIG. 9, the BIER domain consists of multiple IGP domains, and in addition to the intermediate devices BFRs of each IGP domain, the PIM protocol will not run on edge devices such as BR1 and BR2 of IGP domains. When a BFER receives requests from their customers for a certain traffic flow, for example, BFER1 receives a user's traffic flow request for VPN1 and VPN2, BFIR1 will send the traffic flows of these two VPNs to at least one BFER including BFER1 after BFIR1 is notified through PIM protocol signaling.

In order to enable the at least one BFER to quickly detect node failures of the BFIR device or failures of path from the BFIR to the at least one BFER, BFIR1 sends Hello messages carrying BFD information and BIER information to other devices; and a BFER such as BFER1 can therefore establish a multipoint BFD session with BFIR1, and the head of the BFD multipoint path is identified by the BFR-ID representing BFIR1 in the BIER information and the BFD Discriminator in the BFD information. BFIR1 periodically sends BFD messages based on BIER encapsulation to the at least one BFER including BFER1; and when BFIR1 or the path from BFIR1 to the at least one BFER fails, the at least one BFER such as BFER1 can detect the session failure and respond, such as notifying the client device of the traffic disruption.

In order to enable the at least one BFER to quickly respond to traffic failure of the BFIR, BFIR1 sends Hello messages carrying BFD option information, BIER option information and traffic option information to other devices. A BFER such as BFER1 can therefore establish a multipoint BFD session with BFIR1, using the BFR-ID representing BFIR1 in the BIER option information and the BFD Discriminator in the BFD option information, as well as the source address, group address, and/or VPN-ID in the traffic option information to multiplex a multipoint path. For example, BFIR1 assigns different BFD Discriminators to the traffics of VPN1 and VPN2 and notifies them. After receiving the notification, BFER1 creates two different multipoint BFD sessions for VPN1 and VPN2. For these two multipoint BFD sessions, BFIR1 periodically sends separate BFD messages based on BIER encapsulation to the at least one BFER including BFER1.

When the BFIR1 fails or the path from the BFIR1 to the at least one BFER fails, the BFD message sending for these two multipoint BFD sessions will be disrupted. A BFER such as BFER1 can detect the session failures and respond accordingly. If simply the traffic flow of VPN1 on the BFIR1 has a problem, BFIR1 only stops sending the corresponding multipoint BFD session messages for VPN1. In this way, the BFER can detect the VPN1 traffic failure and respond, for example, sending a request for VPN1 traffic flow to the BFIR2, or immediately switching to use the VPN1 traffic flow sent by BFIR2. Multipoint BFD session must be sent by using BIER encapsulation.

When PIM is used as the BIER Overlay protocol, there may be scenarios where no PIM Hello message interaction exists. In this case, the BFD parameters cannot be notified by carrying BFD option information in the Hello message. Therefore, a new BFD type PIM message can be added. This message, like Hello, Join and other messages, is a type of PIM message. This message can be sent to some or all edge devices of the BIER network. For example, in FIG. 1, BFIR1 can send the new PIM message to BFIR2 and all BFERs, or only to some of them. The encapsulation format of the PIM message is similar to that shown in FIG. 6, where Type is set to represent the BFD type, BFD Discriminator is set to a value representing the multipoint BFD session, and BIER option information and/or traffic flow option information are carried in the subsequent optional TLV. The encapsulations of BIER option information and traffic flow option information are similar to those shown in FIG. 4 and FIG. 5. After receiving the message, the receiving devices such as BFER1 can establish a multipoint BFD session according to the BFD Discriminator in the BFD message and the BFR-IDs in the BIER option. It is assumed that BFIR1 has established multipoint BFD sessions for traffic flows of VPN1 and VPN2 respectively, thus the BFD Discriminator corresponding to the traffic flow of VPN1 notified by BFIR is different from the BFD Discriminator corresponding to the traffic flow of VPN2 notified by BFIR, so BFER1 can establish multipoint BFD sessions according to the notification of BFIR1, that is, multicast source group addresses in the traffic flow option information in addition to the BFD Discriminator and BFR-IDs in the BIER information. Assuming that BFIR1, when performing BIER encapsulation on the traffic flows of VPN1 and VPN2, encapsulates the traffic flows of VPN1 and VPN2 into Sub-Domain 1 and Sub-Domain 2 respectively, BFER1 can establish multipoint BFD sessions according to the notification of BFIR1, that is, multicast source group addresses in the traffic flow option information in addition to the BFD Discriminator and Sub-Domain and BFR-IDs in the BIER information. BFIR1 periodically sends BFD messages for these multipoint BFD sessions to keep the sessions alive. Assuming that the traffic of VPN1 fails, BFIR1 will disrupt the BFD message sending for the multipoint BFD session of VPN1 traffic flow. In this way, BFIR1 will detect the problem in a very short time and quickly switch to receiving the traffic flow of VPN1 sent by BFIR2.

The PIM protocol can also be implemented by adding a new BIER type PIM message carrying BFD option information and/or traffic flow option information; or adding new BIER and BFD types of PIM messages, and then carrying traffic flow option information. The processing flow of the HTTP protocol is similar, it is possible to obtain from the HTTP request message or response message the BIER information and BFD information notified, that is, the BIER information such as the sub-domains, BFR-IDs and the BFD Discriminator information, thereby creating a multipoint BFD session; and the session can be associated with the traffic flow information in the HTTP request or response message, which is not repeatedly described here.

Third embodiment: it is assumed that the network is as shown in FIG. 1, the BGP protocol is used as an Overlay protocol in the network, the BGP protocol only runs on BFIR1/2 and BFER1/2/3/4, and does not run on the intermediate devices BFRs; or it is assumed that the network is as shown in FIG. 9, the BIER domain consists of multiple IGP domains, and in addition to the intermediate devices BFRs in each IGP domain, the BGP protocol will not run on the edge devices such as BR1 and BR2 of IGP domains. The BFIR will notify other edge devices of the traffic flow information associated thereto through X-PMSI AD routing. BFER1 to BFER 4 will send response messages to a BFIR selected according to the connected receivers. For example, BFER1 sends response messages to BFIR1 for VPN1 traffic flow, so that BFER1 can receive VPN1 traffic flow sent by BFIR1. Moreover, BFER1 can also send response messages to BFIR2 for VPN1 traffic flow, then BFIR2 will also send VPN1 traffic flow to BFER1, but BFER1 only receive VPN1 traffic flow from BFIR1 and ignores VPN1 traffic flow from BFIR2.

Similarly, in order to achieve rapid failure detection of nodes or traffic flow based on multipoint BFD technology, when BFIR notifies its X-PMSI AD routing, the X-PMSI AD routing information carries BIER path attribute information and BFD Discriminator path attribute information. The receiving device, such as BFER1, creates a multipoint BFD session based on the BFR-IDs and BFD Discriminator in the BIER path attribute information. It is assumed that BFIR1 notifies different BFD Discriminator information and/or different Sub-Domain information for the traffic flow information of VPN1 and VPN2, BFER1 can create two different multipoint BFD sessions based on the Sub-Domains, BFR-IDs and BFD Discriminator. BFIR1 will periodically send BFD messages for these two multipoint BFD sessions. Once the BFER finds that BFD messages are no longer received for a certain multipoint BFD session, for example, the BFD messages sent by BFIR1 for the multipoint BFD session corresponding to the VPN1 traffic flow are no longer received, the BFER quickly switches to receiving the traffic flow from BFIR2 and forwarding it to the receiver. This greatly shortens the time to recover after a traffic problem occurs.

It should be noted that the above BIER path attribute and BFD Discriminator path attribute can not only be notified by following the X-PMSI AD routing, but also be notified by following the NLRI. For example, when BFIR1 notifies its routing information such as the loopback address, its routing information can still carry these two path attributes. The receiving device also creates a multipoint BFD session based on information such as the BFR-IDs in the path attribute and BFD Discriminator, and detects the validity of the session based on periodic BFD messages. This method is also applicable when BGP is used as the underlay protocol of the BIER domain, and can provide a means of detecting the validity of edge nodes. For example, when BFIR1 notifies its loopback address, the address can carry these two path attributes. The receiving device establishes a multipoint BFD session based on the information and detects the validity of BFIR1. When BFIR1 has a problem and cannot continue to work, the receiving device will determine the problem of BFIR1 based on the failure of the BFD session and take measures.

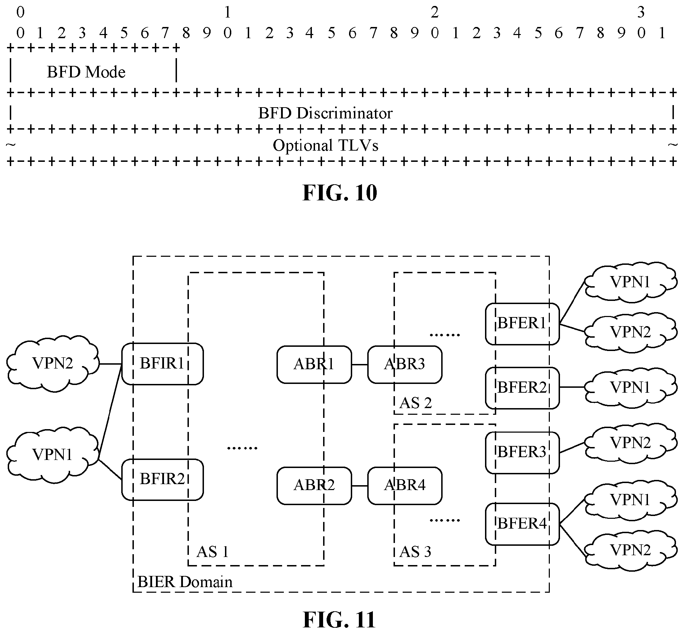

It should be noted that some devices may not be capable of sending BIER path attribute information and BFD Discriminator path attribute at the same time due to software implementation issues. In this case, the BIER information can be sent together with the BFD Discriminator path attribute, in the form of TLV (as shown in the format of FIG. 10, FIG. 10 is another schematic diagram of the format of BIER information, including BFD Mode, BFD Discriminator, Optional TLVs). The encapsulation of BIER information can still refer to FIG. 4. The flows such as multipoint BFD session creation, session alive keeping and cession failure processing performed by the receiving device are similar to those described above and will not be repeated here.

Fourth embodiment: As shown in FIG. 11, FIG. 11 is still another schematic diagram of BIER network flow. The BIER network consists of multiple autonomous system (AS) domains. On the edge devices of the AS domains, in addition to BFIR and at least one BFER, the BGP protocol is also run on the area border routers (ABR) 1 to ABR4 devices to connect the AS domains. Assuming that there is no direct BGP connection between the BFIR and the BFER, but that BIER forwarding paths are created by ABR devices in AS domains one by one, it will appear that although ABR1 to ABR4 devices can send BIER path attribute and BFD Discriminator attribute, because these devices are not edge devices in the BIER network, the BFR-ID information in the BIER path attributes they notify is 0, and in this case, the receiving device cannot create a multipoint BFD session through the BIER path attributes and BFD attributes.

To solve this problem, the device that initiates the multipoint BFD session needs to notify the tunnel encapsulation path attribute in addition to the BFD attribute information, and the tunnel encapsulation path attribute contains BIER information such as BFR-IDs. When forwarding, the area border router ABR must forward these two attributes together. For example, when ABR3 forwards the BGP protocol routing information from BFIR1 obtained from ABR1 to BFER1 and BFER2, it needs to thoroughly transmit the tunnel encapsulation path attribute and BFD path attribute received from ABR1 and sent initially by BFIR1. The receiving device, such as BFER1, multiplexes a multipoint path and creates a multipoint BFD session according to the BFR-IDs in the tunnel encapsulation path attribute and the BFD Discriminator in the BFD path attribute. Similarly, the multipoint BFD session can also be added with Sub-Domain information and traffic flow information to multiplex a multipoint path, in the same way as in the above embodiments, which will not be repeated here.

BFIR1 periodically sends BFD messages to the session it notifies to keep the session alive. Once the session fails, it means that there is a problem with the BFIR1 or a certain traffic flow on BFIR1. The receiving device can detect these problems in a very short time and respond quickly, and the method and process of the detection and response are the same as those in the above embodiments, which will not be repeated here.

Fifth embodiment: In each of the above first to fourth embodiments, a multipoint BFD session established from a BFIR to at least one BFER is described. In fact, the notification technology can also be used to establish a multipoint BFD session from a BFER to other nodes, that is, a multipoint BFD session can be established between any edge nodes of a BIER network. In a network as shown in FIG. 8, it is assumed that MLD is used as the BIER Overlay protocol, a BFIR1 and a BFIR2 are both connected to S1 and send S1 traffic flow information through query messages of the MLD. When a BFER1 sends a response Report message, the response Report message carries BIER information and BFD information corresponding to the BFER1. The BFIR1 can establish a multipoint BFD session based on this, and the BFER1 will periodically send BFD messages for this session, and in this case, the BFIR1 believes that the BFER1 is operating normally. When the BFIR1 does not receive the periodic BFD messages sent by the BFER1 for this session within a certain period of time, it means that there is a problem with the BIER link between the BFIR1 and the BFER1, the BFIR1 can immediately notify the BFIR2 and let the BFIR2 continue to send S1 traffic flow information to the BFER1, and in this way, the traffic disruption time can be significantly reduced, thereby providing full guarantee for high-quality traffic.

In using the PIM protocol, the BGP protocol and the HTTP protocol as the BIER Overlay protocol, similar methods can be used. For example, in using the PIM protocol, the BIER information and the BFD information can be carried by the Join message sent by the BFER; in using the BGP protocol, the BIER information and the BFD information can be notified by the BFER along with its routing information, such as the loopback address, or notified along with the response message of the X-PMSI AD routing. This enables all BIER edge nodes to have a node and/or traffic-level rapid detection session establishment mechanism, which can greatly speed up fault detection and promote the rapid recovery of high-quality traffic.

Sixth embodiment: In some specific scenarios, the creation of a multipoint BFD session cannot be triggered through the BIER Overlay protocol, or the BIER Overlay protocol is not running at all. In this case, the creation of a multipoint BFD session can be directly triggered by sending a BIER BFD message.

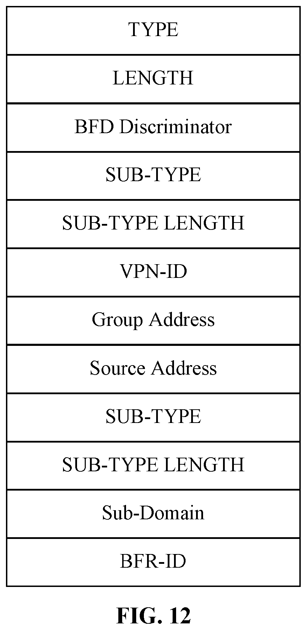

An exemplary method is to add a new BIER OAM protocol message type to represent a BIER BFD message carrying traffic information. Its format is similar to that shown in FIG. 12 which is a schematic diagram of the format of BIER BFD message carrying traffic information. The length field in this case indicates the total length of the BFD Discriminator and the subsequent SUB-TYPE TLV; the subsequent SUB-TYPE TLV carries traffic information, and the SUB-TYPE LENGTH refers to the field length of this SUB-TYPE. For example, when the carried GROUP/SOURCE address is IPv6, the SUB-TYPE LENGTH can be filled in as 36 bytes, which means the sum of VPN-ID length of 4 bytes and address length of two 16 bytes. When there is no VPN, the field value of VPN-ID can be filled in as 0; in addition to carrying traffic information, the SUB-TYPE TLV can further carry BFR-IDs and Sub-Domain information used to send a multipoint BFD message; and this value can also be directly obtained from the BFR-ID field in the BIER header before the BIER OAM message. This allows the direct creation of multipoint BFD session without the Overlay protocol.

In the example shown in FIG. 8, the BFIR1 carries traffic information through a new type of BIER OAM message, the message carries source group information of S1 in addition to the BFD Discriminator, and the message is sent to BFER1 to BFER4. In this way, BFER1 to BFER4 can create a multipoint BFD session based on the received new type of BIER OAM message, and associate the session with the BFIR1 and its S1 traffic; and the BFIR1 periodically sends BIER BFD control messages for this multipoint BFD session, and stops sending BFD messages for the multipoint BFD session when there is a problem with the S1 traffic, so that the BFER can detect the S1 traffic on the BFIR1.

It should be noted that the notification methods shown in the above embodiments can be flexibly combined, which is not limited to the methods described herein. Therefore, according to the notification and processing method of the present application, a correct multipoint BFD session can be established in the BIER network, and the BFD mechanism can be used to quickly discover problems of the device or traffic flow disruption, thereby improving the traffic quality of the BIER network.

A device for implementing BFD in a BIER network is further provided according to embodiments of the present application, which is applied to a first BFIR and includes: a memory and a processor.

The memory is configured to store a program;
The processor is configured to execute a program. When the program is executed, the program is configured to notify at least one BFER of a BIER network of BIER information and BFD information; and establish a multipoint BFD session with the at least one BFER that successfully receives the BIER information and BFD information, and the multipoint BFD session is associated with traffic flow information transmitted by the first BFIR.

A device for implementing BFD in a BIER network is further provided according to embodiments of the present application, which is applied to a BFER and includes: a memory and a processor.

The memory is configured to store a program.

The processor is configured to execute a program. When the program is executed, the program is configured to receive BIER information and BFD information notified by a first BFIR of a BIER network and is configured to establish a multipoint BFD session with the first BFIR, and the multipoint BFD session is associated with traffic flow information transmitted by the first BFIR.

A storage medium containing a computer program is further provided according to embodiments of the present application. When the computer program is executed by a computer processor, it is used to execute a method for implementing BFD in a BIER network. In the method, a first BFIR notifies at least one BFER of a BIER network of BIER information and BFD information; a multipoint BFD session is established between the first BFIR and the at least one BFER that successfully receives the BIER information and BFD information, and the multipoint BFD session is associated with traffic flow information transmitted by the first BFIR.

A storage medium containing a computer program is further provided according to embodiments of the present application. When the computer program is executed by a computer processor, it is used to execute a method for implementing BFD in a BIER network. In the method, at least one BFER receives BIER information and BFD information notified by a first BFIR of a BIER network; a multipoint BFD session is established between the at least one BFER that successfully receives the BIER information and BFD information and the first BFIR, and the multipoint BFD session is associated with traffic flow information transmitted by the first BFIR.

## Claims

1. A method for implementing BFD in a BIER network, comprising:
notifying, by a first bit-forwarding ingress router, BFIR, each bit-forwarding egress router, BFER, in a bit indexed explicit replication, BIER, network of bit indexed explicit replication, BIER, information and bidirectional forwarding detection, BFD, information; and
establishing, by the first BFIR, a multipoint BFD session with at least one BFER in the BIER network that successfully receives the BIER information and the BFD information, wherein the multipoint BFD session is associated with traffic flow information transmitted by the first BFIR.

2. The method according to claim 1, wherein notifying, by the first BFIR, each BFER in the BIER network of the BIER information and the BFD information, comprises:
notifying, by the first BFIR, each BFER in the BIER network of the BIER information and the BFD information through a BIER Overlay protocol message, a Border Gateway Protocol, BGP, message, or a BIER Operation Maintenance Management, OAM, protocol message.

3. The method according to claim 2, wherein the BIER Overlay protocol message comprises any one of the following messages:
a query message of a Multicast Listener Discovery, MLD, protocol;
a query message of an Internet Group Management Protocol, IGMP;
a Protocol Independent Multicast, PIM, message; and
a request message of a Hypertext Transfer Protocol, HTTP.

4. The method according to claim 2, wherein,
in response to the first BFIR notifying each BFER in the BIER network of the BIER information and the BFD information through the BGP message, the multipoint BFD session is associated with traffic flow information of p-multicast service interfaces, X-PMSI, or Network Layer Reachable Information, NLRI, Auto Discovery, AD, routing in the BGP message;
wherein the BGP message carries the BIER information and the BFD information; or a BGP path attribute of the BGP message carries the BIER information and the BFD information; or tunnel encapsulation path data of the BGP message carries the BIER information and the BFD information.

5. The method according to any one of claims 1 to 4, wherein the BIER Overlay protocol message, the BGP message or the BIER OAM protocol message further carries traffic information.

6. The method according to claim 5, wherein, in response to the first BFIR further notifying each BFER of the traffic information through the BIER Overlay protocol message, the BGP message or the BIER OAM protocol message, the traffic information corresponds to a BFD discriminator in the BFD information.

7. The method according to any one of claims 1 to 4, wherein the BFD information comprises a BFD Discriminator.

8. The method according to any one of claims 1 to 4, wherein the BIER information comprises:
a bit-forwarding router, BFR, identifier and/or subdomain information.

9. The method according to any one of claims 1 to 4, after the first BFIR notifies each BFER in the BIER network of the BIER information and the BFD information, further comprising:
receiving, by the first BFIR, the BIER information and the BFD information from the at least one BFER that successfully receives the BIER information and the BFD information.

10. The method according to any one of claims 1 to 4, after the first BFIR establishes the multipoint BFD session with the at least one BFER that successfully receives the BIER information and the BFD information, further comprising:
keeping, by the first BFIR, the multipoint BFD session alive until the first BFIR fails or a multicast traffic transmitted by the first BFIR fails.

11. The method according to claim 5, wherein establishing, by the first BFIR, the multipoint BFD session with the at least one BFER that successfully receives the BIER information and the BFD information comprises:
for each traffic flow of a plurality of traffic flows, establishing, by the first BFIR, a respective multipoint BFD session with the at least one BFER that successfully receives the BIER information and the BFD information, and the respective multipoint BFD session is associated with traffic flow information of each traffic flow transmitted by the first BFIR.

12. A method for implementing BFD in a BIER network, comprising:
receiving, by at least one bit-forwarding egress router, BFER, in a bit indexed explicit replication, BIER, network, bit indexed explicit replication, BIER, information and bidirectional forwarding detection, BFD, information notified by a first bit-forwarding ingress router, BFIR, in the BIER network; and
establishing, by the at least one BFER, a multipoint BFD session with the first BFIR, wherein the multipoint BFD session is associated with traffic flow information transmitted by the first BFIR.

13. The method according to claim 12, wherein receiving, by the at least one BFER, the BIER information and the BFD information notified by the first BFIR in the BIER network comprises:
receiving, by the at least one BFER, the BIER information and the BFD information notified by the first BFIR in the BIER network through a BIER Overlay protocol message, a Border Gateway Protocol, BGP, message or a BIER Operation Maintenance Management, OAM, protocol message.

14. The method according to claim 13, wherein the BIER Overlay protocol message comprises any one of the following information:
a query message of a Multicast Listener Discovery, MLD, protocol;
a query message of an Internet Group Management Protocol, IGMP;
a Protocol Independent Multicast, PIM, message; and
a request message of a Hypertext Transfer Protocol, HTTP.

15. The method according to claim 13, wherein,
in response to the at least one BFER receiving the BIER information and the BFD information notified by the first BFIR in the BIER network through the BGP message, the multipoint BFD session is associated with traffic flow information of p-multicast service interfaces, X-PMSI, or Network Layer Reachable Information, NLRI, Auto Discovery, AD, routing in the BGP message;
wherein the BGP message carries the BIER information and the BFD information; or a BGP path attribute of the BGP message carries the BIER information and the BFD information; or tunnel encapsulation path data of the BGP message carries the BIER information and the BFD information.

16. The method according to any one of claims 12 to 15, wherein the BIER Overlay protocol message, the BGP message or the BIER OAM protocol message further carries traffic information.

17. The method according to any one of claims 12 to 15, wherein the BFD information comprises a BFD Discriminator.

18. The method according to claim 16, wherein in response to the traffic information being further notified by the first BFIR through the BIER Overlay protocol message or the BIER OAM protocol message, the traffic information corresponds to a BFD Discriminator in the BFD information.

19. The method according to any one of claims 12 to 15, wherein the BIER information comprises: a bit-forwarding router, BFR, identifier and/or subdomain information.

20. The method according to any one of claims 12 to 15, after the at least one BFER receives the BIER information and the BFD information notified by the first BFIR in the BIER network, further comprising:
sending, by the at least one BFER, the BIER information and the BFD information to the first BFIR.

21. The method according to claim 16, wherein establishing, by the at least one BFER, the multipoint BFD session with the first BFIR comprises:
for each traffic flow of a plurality of traffic flows, establishing, by each of the at least one BFER, a respective multipoint BFD sessions with the first BFIR, wherein the respective multipoint BFD session is associated with traffic flow information of each traffic flow transmitted by the first BFIR.

22. A device for implementing BFD in a BIER network, applied to a first bit-forwarding ingress router, BFIR, comprising:
a memory configured to store a program;
a processor configured to execute a program, wherein the program is configured to, when being executed, notify each bit-forwarding egress router, BFER, in a bit indexed explicit replication, BIER, network of bit indexed explicit replication, BIER, information and bidirectional forwarding detection,, BFD, information; and establish a multipoint BFD session with at least one BFER in the BIER network that successfully receives the BIER information and the BFD information, wherein the multipoint BFD session is associated with traffic flow information transmitted by the first BFIR.

23. A device for implementing BFD in a BIER network, applied to a bit-forwarding egress router, BFER, comprising:
a memory, configured to store a program;
a processor, configured to execute a program, wherein the program is configured to, when being executed, receive bit indexed explicit replication, BIER, information and bidirectional forwarding detection, BFD, information notified by a first bit-forwarding ingress router, BFIR, in a bit indexed explicit replication, BIER, network; and establish a multipoint BFD session with the first BFIR, wherein the multipoint BFD session is associated with traffic flow information transmitted by the first BFIR.

24. A non-volatile storage medium, comprising a stored program, wherein the program, when running, executes the method for implementing the BFD in the BIER network according to any one of claims 1 to 21.
